(19) Europäisches Patentamt
European Patent Office
Office européen des brevets

(11) Veröffentlichungsnummer: **0 204 268**
**B1**

(12) # EUROPÄISCHE PATENTSCHRIFT

(45) Veröffentlichungstag der Patentschrift: **05.04.89**

(51) Int. Cl.⁴: **C07F 9/165**, A01N 57/14

(21) Anmeldenummer: **86107325.2**

(22) Anmeldetag: **30.05.86**

(54) **Bisthiolphosphate, Verfahren zu ihrer Herstellung und ihre Verwendung zur Bekämpfung von Schädlingen und Mittel dafür.**

(30) Priorität: **05.06.85 DE 3520112**
**28.06.85 DE 3523183**

(43) Veröffentlichungstag der Anmeldung:
**10.12.86 Patentblatt 86/50**

(45) Bekanntmachung des Hinweises auf die Patenterteilung:
**05.04.89 Patentblatt 89/14**

(84) Benannte Vertragsstaaten:
**AT BE CH DE FR GB LI NL**

(56) Entgegenhaltungen:
**DE-A- 2 111 589**
**DE-A- 3 023 049**
**FR-A- 2 192 765**
**US-A- 3 725 546**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen(DE)**

(72) Erfinder: **Buerstinghaus, Rainer, Dr., Roentgenstrasse 38, D-6900 Heidelberg(DE)**
Erfinder: **Adolphi, Heinrich, Dr., Kalmitweg 11, D-6703 Limburgerhof(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Gegenstand der Erfindung sind neue Bisthiolphosphate, ein Verfahren zu ihrer Herstellung, Schädlingsbekämpfungsmittel, die diese Bisthiolphosphate als Wirkstoffe enthalten, sowie ein Verfahren zur Bekämpfung von Schädlingen mit diesen Wirkstoffen.

Wirkstoffe aus der Gruppe der Benzylbisthiolphosphate, die zur Bekämpfung von Schädlingen geeignet sind, sind aus der DE-OS 2 111 589, der DE-OS 3 023 049 sowie aus US-A 3 725 546 bekannt. Sie eignen sich als Insektizide, Akarizide und Nematizide. Ihre Wirkung ist jedoch speziell bei geringer Konzentration nicht immer ganz zufriedenstellend.

Es wurde gefunden, daß Benzylbisthiolphosphate der Formel I

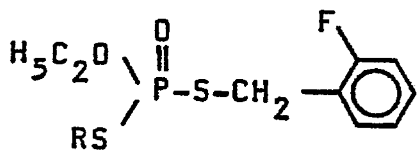

I

in der R einen unverzweigten oder verzweigten Alkylrest mit 3 bis 5 Kohlenstoffatomen bedeuten, Schädlinge aus der Klasse der Insekten und Nematoden wirksamer bekämpfen als bekannte Bisthiolphosphate.

Als Alkylreste für R seien n-Propyl, Isopropyl, Isobutyl, sec.-Butyl und 3-Methyl-butyl genannt.

Die neuen Verbindungen werden hergestellt, indem man bekannte bzw. handelsübliche Benzylhalogenide der Formel II

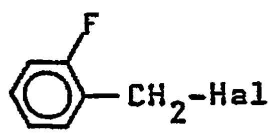

II,

in der Hal für ein Halogenatom steht, mit Salzen von Dithiophosphorsäurederivaten der Formel III

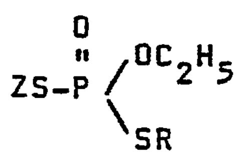

III,

in der R die in Anspruch 1 genannte Bedeutung hat und Z ein Alkaliion, ein Äquivalent Erdalkaliion oder ein gegebenenfalls durch Alkylreste substituiertes Ammoniumion bedeuten, umsetzt.

Als Halogenatome in der Formel II kommen insbesondere Chlor oder Brom in Betracht. In der Formel III stellt Z vorzugsweise ein Natrium- oder Kaliumion oder ein Ammonium- bzw. methyliertes Ammoniumion dar. Insbesondere eignet sich das Dimethylammoniumion zur Umsetzung.

Die Umsetzung wird in der für die Umsetzung von organischen Halogenverbindungen mit Alkalisalzen üblichen Weise, z.B. unterhalb von 150°C in einem Lösungs- bzw. Verdünnungsmittel durchgeführt. Hierfür sind beispielsweise geeignet: Wasser, Alkohole wie Methanol, Ethanol, Propanol; Ether wie Tetrahydrofuran, Dioxan, Diglykoldimethylether; Ketone wie Aceton, Methylethylketon, Diethylketon; aromatische Kohlenwasserstoffe wie Toluol, Xylol, Chlorbenzol; Nitrile wie Acetonitril, Propionitril, polare, aprotische Solventien wie Dimethylformamid, Dimethylsulfoxid. Auch Gemische dieser Lösungs- und Verdünnungsmittel können verwendet werden. Bei Verwendung von nichtwäßrigen Lösungsmitteln kann die Zugabe einer katalytischen Menge Kaliumjodid zur Erhöhung der Reaktivität zweckmäßig sein.

Man setzt die Ausgangsstoffe in oder mit einem Überschuß des einen oder anderen Partners ein.

Aus dem Reaktionsgemisch wird der erfindungsgemäße Wirkstoff in üblicher Weise gewonnen, z.B. durch Versetzen mit Wasser, Trennen der Phasen und Destillation und/oder Säulenchromatographie.

Die neuen Verbindungen der Formel I fallen teilweise in Form farbloser oder schwach bräunlich gefärbter Öle an, die sich durch längeres Erwärmen unter vermindertem Druck auf mäßig erhöhte Temperatur ("Andestillieren") von den letzten flüchtigen Anteilen befreien und auf diese Weise reinigen lassen.

Das folgende Beispiel soll die Herstellung der erfindungsgemäßen Verbindungen erläutern:

Herstellbeispiel 1

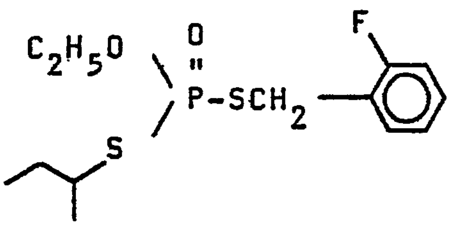

Eine Lösung von 18,65 g Dimethylammonium-O-ethyl-S-sec. butyldithiophosphat und 8,66 g 2-Fluorbenzylchlorid in 60 ml Acetonitril wird 7 Stunden auf 65°C erwärmt. Nach Erkalten wird das Lösungsmittel am Rotationsverdampfer abgezogen, der Rückstand in Ether aufgenommen und gründlich mit Wasser gewaschen. Die organische Phase wird über Natriumsulfat getrocknet, das Lösungsmittel i.V. entfernt und der Rückstand bei 0,01 mbar und 50°C andestilliert. Man erhält 15,3 g O-Ethyl-S-sec. butyl-S-(2-fluorbenzyl)dithiophosphat als "strohfarbenes" Öl. Ausbeute: 79% der rechnerisch möglichen.

$C_{13}H_{20}FO_2PS_2$ (322)
Ber.: C 48,4 H 6,3
Gef.: C 48,5 H 6,3
Infrarotabsorptionen aus dem "fingerprint"-Bereich ($cm^{-1}$): 1457, 1234, 1096, 1016, 953.

Die in der nachstehenden Tabelle als Beispiele 2–6 aufgeführten Verbindungen wurden ebenfalls auf dem im Beispiel 1 beschriebenen Weg erhalten, soweit sie durch Infrarotabsorption identifiziert sind; andere Verbindungen, die der Formel (I) entsprechen, können auf die gleiche Weise unter entsprechender Abwandlung der Vorschrift nach der jeweils benötigten Menge und (wegen der besten Reaktionsbedingungen) gegebenenfalls nach einem Vorversuch erhalten werden.

Tabelle

| Beispiel-Nr. | R | Infrarotabsorptionen ($cm^{-1}$) |
|---|---|---|
| 2 | Isopropyl | 1380, 1360, 1230, 1015, 950 |
| 3 | n-Propyl | 1290, 1230, 1090, 1015, 950 |
| 4 | Isobutyl | 1380, 1360, 1250, 1090, 1015 |
| 5 | 3-Methylbutyl | 1380, 1360, 1230, 1090, 1015 |
| 6 | tert. Butyl | |

Die vorstehend aufgeführten und andere erfindungsgemäße Wirkstoffe werden auf die für Phosphorsäureester übliche Weise angewendet. Angaben zur Formulierung, Anwendungstechnik und Wirkungsweise und Angaben über geeignete Mischungspartner zur Erzielung synergistischer und anderer vorteilhafter Wirkungen können beispielsweise der US-PS 4 320 122 entnommen werden.

Als Vergleichsmittel in den nachstehenden Anwendungsbeispielen wurden die folgenden vergleichbaren Stoffe eingesetzt:

I

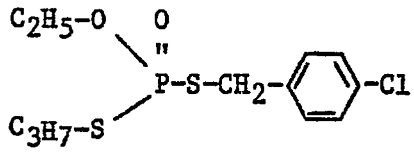

aus DE-OS 21 11 589

II

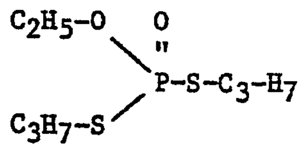

Ethoprop (Handelsprodukt)

III

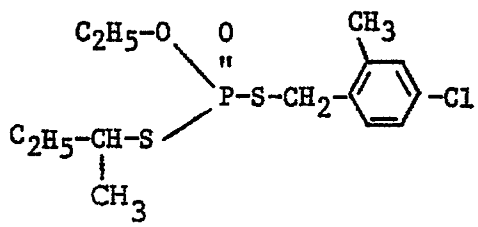

aus DE-OS 30 23 049

IV

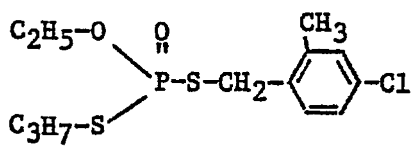

aus DE-OS 30 23 049

V

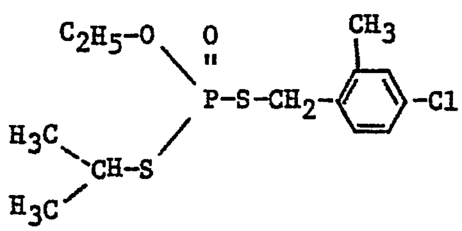

aus DE-OS 30 23 049

Kontaktwirkung auf Schaben (Blatta orientalis)

Der Boden eines 1 l-Weckglases wird mit der acetonischen Lösung des Wirkstoffes behandelt. Nach Verdunsten des Lösungsmittels setzt man je Glas 5 adulte Schaben. Die Mortalitätsrate wird nach 48 Stunden bestimmt.

| | mg | % Mort. |
|---|---|---|
| Beanspruchte Verb. 1 | 0,08 | 100 |
| Beanspruchte Verb. 3 | 0,1 | 100 |
| Beanspruchte Verb. 4 | 0,1 | 100 |
| Vergleichsmittel I | 0,2 | 100 |
| Vergleichsmittel III | 0,25 | 100 |
| Vergleichsmittel IV | 0,5 | 100 |
| Vergleichsmittel V | 1,0 | 80 |

Dauerkontakt auf Stubenfliegen (Musca domestica)

Petrischalen mit 10 cm Durchmesser werden innen mit der azetonischen Lösung der Wirkstoffe behandelt.

Nach Verdunsten des Lösungsmittels besetzt man die Schalen mit 20 4-Tage alten Stubenfliegen.

Die Mortalität wird nach 4 Stunden ermittelt.

| | mg | % Mort. |
|---|---|---|
| Beanspruchte Verb. 1 | 0,02 | 100 |
| Beanspruchte Verb. 3 | 0,02 | 100 |
| Vergleichsmittel I | 0,2 | 100 |
| Vergleichsmittel III | 0,2 | 80 |
| Vergleichsmittel IV | 2,0 | 100 |
| Vergleichsmittel V | 2,0 | 100 |

Kontaktwirkung auf Kornkäfer (Sitophilus granaria)

Petrischalen von 10 cm Durchmesser werden mit der acetonischen Wirkstofflösung ausgekleidet. Nach Verdunsten des Lösungsmittels belegt man die Schalen mit 100 Kornkäfern. Nach 4 Stunden werden die Käfer in unbehandelte Gefäße überführt. Die Mortalitätsrate wird nach 24 Stunden ermittelt. Dabei wird festgestellt, wieviele Käfer in der Lage sind, nach diesem Zeitpunkt innerhalb von 60 Minuten ein unbehandeltes Pappschälchen (Durchmesser 40 mm, Höhe 10 mm) zu verlassen.

| | mg | % Mort. |
|---|---|---|
| Beanspruchte Verb. 1 | 0,02 | 100 |
| Beanspruchte Verb. 2 | 0,01 | ca. 80 |
| Beanspruchte Verb. 3 | 0,04 | ca. 80 |
| Beanspruchte Verb. 4 | 0,02 | 100 |
| Vergleichsmittel I | 0,1 | 100 |
| Vergleichsmittel II | 0,1 | 100 |
| Vergleichsmittel III | 0,1 | ca. 80 |
| Vergleichsmittel IV | 1,0 | 100 |
| Vergleichsmittel V | 1,0 | 80 |

Zuchtversuch mit Stubenfliegen-Larven (Musca domestica)

Je 4,5 ml Magermilch füllt man in 50 ml Penicillingläser und versetzt sie darauf mit 0,5 ml der wäßrigen Wirkstoffaufbereitung. Nach kurzem Mischen fügt man ein Wattebällchen (Firma Hartmann, Maintal) dazu und belegt dieses mit ca. 50 Ei-Larven der Stubenfliege.

Die Gläser lagert man abgedeckt bei Raumtemperatur und beurteilt die Entwicklung nach 7 Tagen.

| | ppm | % Mort. |
|---|---|---|
| Beanspruchte Verb. 1 | 0,5 | 100 |
| Vergleichsmittel I | 5,0 | 100 |
| Vergleichsmittel II | 2,5 | 100 |
| Vergleichsmittel IV | 10 | ca. 80 |
| Vergleichsmittel V | 50 | 80 |

Fraß- und Kontaktwirkung auf Raupen der Kohlschabe (Plutella maculipennis)

Blätter von jungen Kohlpflanzen werden 3 Sekunden in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt.

Nach 48 Stunden beurteilt man die Wirkung.

| | % | % Mort. |
|---|---|---|
| Beanspruchte Verb. 1 | 0,005 | 100 |
| Beanspruchte Verb. 2 | 0,05 | 100 |
| Beanspruchte Verb. 3 | 0,02 | 100 |
| Beanspruchte Verb. 4 | 0,01 | 100 |

Kontaktwirkung auf Zecken (Ornithodorus moubata)

Die Prüfung erfolgt an jungen Zecken, die erst einmal Blut aufgenommen haben. Je 5 Tiere werden in einen TEEFIX-Beutel 5 Sekunden in die wäßrige Wirkstoffaufbereitung getaucht. Der Beutel wird frei aufgehängt. Nach 48 Stunden ermittelt man die Mortalitätsrate.

Die Versuchstemperatur beträgt 25–26°C.

| | % | % Mort. |
|---|---|---|
| Beanspruchte Verb. 1 | 0,0025 | 80 |
| Beanspruchte Verb. 4 | 0,0025 | 100 |
| Vergleichsmittel III | 0,04 | 100 |

Wirkung auf Wurzelgallennematoden (Meloidogyne incognita)

Je 300 g Komposterde werden mit 30 ml der wäßrigen Wirkstoffaufbereitung innig vermischt und in Plastiktöpfe gefüllt. Darauf bepflanzt man die Töpfe mit Tomatensetzlingen und hält diese unter Gewächshausbedingungen bei 22–24°C.

Nach 6–8 Wochen untersucht man die Wurzeln auf Gallenbildung.

| | % | |
|---|---|---|
| Beanspruchte Verb. 1 | 0,02 | 100% Mort. |
| | 0,01 | ca. 80% Hemmung |
| Vergleichsmittel III | 0,05 | ca. 80% Hemmung |
| Vergleichsmittel IV | 0,05 | ca. 80% Hemmung |
| Vergleichsmittel V | 0,1 | keine Hemmung der Gallenbildung |

**Patentansprüche**

1. Benzylbisthiolphosphate der Formel I

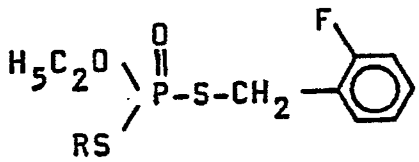

I

in der R einen unverzweigten oder verzweigten Alkylrest mit 3 bis 5 Kohlenstoffatomen bedeutet.

2. Schädlingsbekämpfungsmittel, enthaltend eine Verbindung der Formel I gemäß Anspruch 1.

3. Schädlingsbekämpfungsmittel, enthaltend einen festen oder flüssigen Trägerstoff und mindestens eine Verbindung der Formel I gemäß Anspruch 1.

4. Verfahren zur Bekämpfung von Schädlingen, dadurch gekennzeichnet, daß man Verbindungen der Formel I gemäß Anspruch 1 auf die genannten Schädlinge bzw. deren Lebensraum einwirken läßt.

5. Verwendung von Verbindungen der Formel 1 gemäß Anspruch 1 zur Bekämpfung von Schädlingen.

6. Verfahren zur Herstellung von Schädlingsbekämpfungsmittel, dadurch gekennzeichnet, daß man Verbindungen der Formel I gemäß Anspruch 1 mit Streckmitteln und/oder oberflächenaktiven Mitteln mischt.

7. Verfahren zur Herstellung der Verbindungen der Formel I gemäß Anspruch 1, dadurch gekennzeichnet, daß man Verbindungen der Formel II

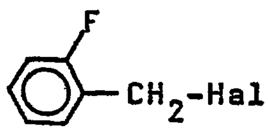

II,

in der Hal für ein Halogenatom steht, mit Salzen von Dithiophosphorsäurederivaten der Formel III

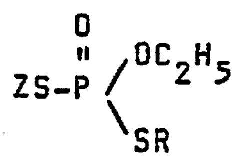

III,

in der R die in Anspruch 1 genannte Bedeutung hat und Z ein Alkaliion, ein Äquivalent Erdalkaliion oder ein gegebenenfalls durch Alkylreste substituiertes Ammoniumion bedeuten, umsetzt.

**Claims**

1. A benzyl bisthiophosphate of the formula I

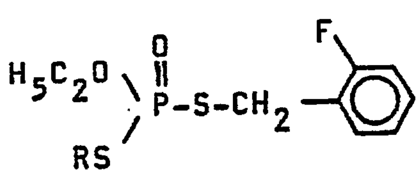

I

where R is straight-chain or branched alkyl of 3 to 5 carbon atoms.

2. A pesticide containing a compound of the formula I as set forth in claim 1.

3. A pesticide containing a solid or liquid carrier and at least one compound of the formula I as set forth in claim 1.

4. A process for combating pests, wherein a compound of the formula I as set forth in claim 1 is allowed to act on the said pests or their habitat.

5. The use of compounds of the formula I as set forth in claim 1 for combating pests.

6. A process for manufacturing a pesticide, wherein a compound of the formula I as set forth in claim 1 is mixed with extenders and/or surfactants.

7. A process for the manufacture of compounds of the formula I as set forth in claim 1, wherein a compound of the formula II

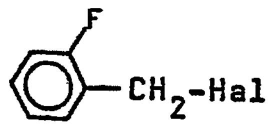

II,

where Hal is halogen, is reacted with a salt of a dithiophosphoric acid derivative of the formula III

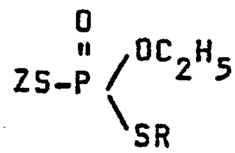

III,

where R has the meanings given in claim 1 and Z is an alkali metal ion, one equivalent of an alkaline earth metal ion or an unsubstituted or alkyl-substituted ammonium ion.

## Revendications

1. Bis-thiolphosphate de benzyle de formule I

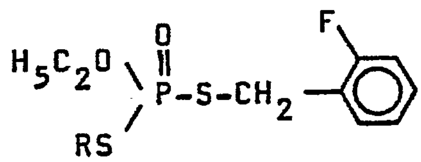

I

dans laquelle R représente un reste alkyle, ramifié ou non ramifié, à 3 à 5 atomes de carbone.

2. Agent de lutte contre les parasites contenant un composé de formule I selon la revendication 1.

3. Agent de lutte contre les parasites contenant un support solide ou liquide et au moins un composé de formule I selon la revendication 1.

4. Procédé de lutte contre les parasites, caractérisé par le fait que l'on fait agir des composés de formule I selon la revendication 1 sur les parasites ou leur biotope.

5. Utilisation de composés de formule I selon la revendication 1 pour lutter contre les parasites.

6. Procédé de préparation d'agent de lutte contre les parasites, caractérisé par le fait que l'on mélange des composés de formule I selon la revendication 1 avec des diluants et/ou agents tensioactifs.

7. Procédé de préparation de composés de formule I selon la revendication 1, caractérisé par le fait que l'on fait réagir des composés de formule II

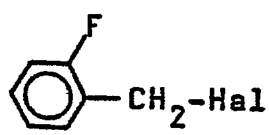

II,

dans laquelle Hal représente un atome d'halogène avec des sels de dérivés d'acide dithiophosphorique de formule III

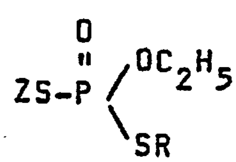

III,

dans laquelle R a la signification donnée dans la revendication 1 et Z représente un ion alcalin, un ion alcalino-terreux équivalent ou un ion ammonium éventuellement substitué par des restes alkyle.